Europäisches Patentamt

European Patent Office

Office européen des brevets

(19)

(11) Veröffentlichungsnummer : **0 440 208 B1**

(12) # EUROPÄISCHE PATENTSCHRIFT

(45) Veröffentlichungstag der Patentschrift :
**14.07.93 Patentblatt 93/28**

(51) Int. Cl.⁵ : **A23C 19/024,** A01J 11/10,
B01D 37/04, A01J 25/11

(21) Anmeldenummer : **91101225.0**

(22) Anmeldetag : **30.01.91**

(54) **Verfahren und Einrichtung zur verbesserten kontinuierlichen Trennung eines Zustroms gesäuerter Milch in einen Käsebruchstrom und einen Molkestrom.**

(30) Priorität : **30.01.90 DE 4002638**

(43) Veröffentlichungstag der Anmeldung :
**07.08.91 Patentblatt 91/32**

(45) Bekanntmachung des Hinweises auf die Patenterteilung :
**14.07.93 Patentblatt 93/28**

(84) Benannte Vertragsstaaten :
**AT BE CH DE ES FR GB IT LI SE**

(56) Entgegenhaltungen :
**EP-A- 0 038 254
DE-A- 3 238 462
DE-C- 3 819 704
FR-A- 2 231 318
GB-A- 1 280 534**

(73) Patentinhaber : **KRAFT GENERAL FOODS R & D, Inc. Zweigniederlassung München Zweigniederlassung der "Kraft General Foods R & D, Inc." mit dem Sitz in Wilmington, Delaware, USA Postfach 83 05 50 Unterbiberger Strasse 15 W-8000 München 83 (DE)**

(72) Erfinder : **Anbarci, Ahmet, Dr.,-Ing. Johann-Strauss-Strasse 4 W-8025 Unterhaching (DE)**
Erfinder : **Nassauer, Joseph, Dr.-Ing. Gartenstrasse 1 W-8051 Langenbach (DE)**

(74) Vertreter : **Weickmann, Heinrich, Dipl.-Ing. et al Patentanwälte H. Weickmann, Dr. K. Fincke F.A. Weickmann, B. Huber Dr. H. Liska, Dr. J. Prechtel Kopernikusstrasse 9 Postfach 86 08 20 W-8000 München 86 (DE)**

## Beschreibung

Die Erfindung betrifft ein Verfahren zum kontinuierlichen Trennen eines Zustroms von gesäuerter Milch in zwei Teilströme nämlich einen Käsebruchstrom und einen Molkestrom, mit Hilfe einer Trennvorrichtung, wobei der Durchsatz eines der Teilströme zur Beeinflußung des Trockenmassegehalts des Käsebruchstroms veränderbar ist.

Wenn hier von Käsebruchstrom gesprochen wird, so soll dieser Begriff sowohl einen Käsebruch üblicher Konsistenz ausdrücken, wie er unmittelbar zur Käseherstellung eingesetzt werden kann und wie er zum Beispiel bei Verwendung eines Zentrifugalseparators an dessen einem Ausgang gewonnen wird, darüber hinaus soll der Ausdruck "Käsebruchstrom" aber allgemein den Retentatstrom bezeichnen, der am Ausgang einer beliebigen Trennvorrichtung gewonnen wird, beispielsweise den Retentatstrom, der bei Verwendung ein- oder mehrstufigen Ultrafiltrationsanlage nach der DE-PS 38 19 704 gewonnen wird und der ggf. einer weiteren Konzentrierung vor der Frischkäseherstellung bedarf.

Der Käsebruch soll mit einem möglichst genau bestimmten Trockenmassegehalt anfallen, da der Trockenmassegehalt in dem Käsebruch bzw. den aus dem Käsebruch durch Weiterverarbeitung entstehenden Produkten z.B. durch lebensmittelrechtliche Bestimmungen oder firmeninterne Qualitätsstandards vorgeschrieben ist. Im Interesse der Käufer, im Hinblick auf diese Bestimmungen und im Hinblick auf die Qualitätsvorstellungen des jeweiligen Herstellerbetriebs darf ein vorbestimmter Wert des Trockenmassegehalts nicht unterschritten werden; andererseits führt auch eine Überschreitung des Trockenmassegehalts zu Verfälschungen des Produkts und zu wirtschaftlichen Einbußen des Verarbeiters.

Man hat bisher bei der Trennung von gesäuerter Milch in einer Zentrifuge den Trockenmassegehalt dadurch eingestellt, daß am Molkeauslauf der Zentrifuge ein Drosselventil manuell eingestellt wurde. Die Einstellung des Drosselventils erfolgte unter Berücksichtigung des labormäßig gemessenen Trockenmassegehalts des Endprodukts und aufgrund von Erfahrungswerten über den Zusammenhang zwischen Trockenmasseveränderung und Einstellungsveränderung des Drosselventils. Zwischen aufeinander folgenden Laborbestimmungen erfolgte die Einstellung des Drosselventils durch den Bedienungsmeister aufgrund der Beobachtung des Fließverhaltens des Käsebruchstroms. Um den oben erwähnten vorbestimmten Mindestgehalt an Trockenmasse im Käsebruchstrom mit Sicherheit einzuhalten, mußte in allen Fällen ein erheblicher Sicherheitsspielraum vorgesehen werden; dies bedeutet, daß in aller Regel der Trockenmassegehalt des Käsebruchstroms erheblich über dem vorbestimmten Mindestgehalt lag.

Versuche, den Trockenmassegehalt des Käsebruchstroms an dem die Trennvorrichtung verlassenden Käsebruchstrom laufend zu messen und danach zu regeln, haben sich in der Praxis als meßtechnisch sehr aufwendig erwiesen.

Auch der Versuch, den Trockenmassegehalt des Zustroms gesäuerter Milch mit herkömmlichen Meßmethoden zu erfassen und danach eine Regelung auf konstanten Trockenmassegehalt in dem Käsebruchstrom vorzunehmen, haben nicht zu dem gewünschten Erfolg geführt. Es wurde nun erkannt, daß der Luft- und Gasgehalt in dem der Trennvorrichtung zulaufenden Strom gesäuerter Milch erheblichen Schwankungen unterliegt und diese Schwankungen die Messungen des Trockenmassegehalts in dem Zustrom gesäuerter Milch so erheblich beeinflussen, daß die mit herkömmlichen Meßmethoden erhaltenen Meßergebnisse bezüglich des Trockenmassegehalts des Zustroms gesäuerter Milch keine geeignete Regelgröße für die Regelung des Trockenmassegehalts in dem Käsebruchstrom darstellen.

Aus der deutschen Offenlegungsschrift 32 38 462 ist ein Verfahren zur kontinuierlichen Einstellung des Fettgehalts von Rahm bekannt. Bei diesem Verfahren wird fetthaltige Rohmilch in einem Separator in fettfreie Magermilch und Rahm getrennt. Dabei wird der Durchsatz pro Zeiteinheit sowie der Fettgehalt der Rohmilch gemessen. Andererseits wird der Durchsatz pro Zeiteinheit des den Separator verlassenden Rahms laufend gemessen. Die Meßwerte werden in einem Prozeßrechner (Prozessor) eingesteuert, welcher nach Maßgabe der eingegebenen Werte die ausgetretene Menge pro Zeiteinheit des Rahms bestimmt.

Es hat sich gezeigt, daß dieses Verfahren beim kontinuierlichen Trennen eines Zustroms gesäuerter Milch in einen Käsebruchstrom und einen Molkestrom nicht anwendbar ist, da beim kontinuierlichen Trennen von fetthaltiger Rohmilch in fettfreie Magermilch und Rahm das Problem des Luft- und Gasgehalts weit weniger ins Gewicht fällt, als beim Trennen von gesäuerter Milch in Käsebruch und Molke.

Der Erfindung liegt die Aufgabe zugrunde, bei einem Verfahren der eingangs bezeichneten Art für eine genauere Einhaltung des Trockenmassegehalts in dem aus der Trennvorrichtung austretenden Käsebruchstrom zu sorgen. Zur Lösung dieser Aufgabe wird erfindungsgemäß vorgeschlagen, daß in dem Zustrom der gesäuerten Milch ein deren Trockenmassegehalt repräsentierender, von dem Luft- und Gasgehalt des Zustroms der gesäuerten Milch unabhängiger Meßwert zum einen durch eine Mikrowellentransmissionsmessung und zum anderen durch eine zusätzliche Dichtemessung des Zustroms der gesäuerten Milch ermittelt wird und daß der Durchsatz pro Zeiteinheit mindestens eines der Teilströme in Abhängigkeit von diesem Meßwert auf eine Konstanthaltung des Trockenmassegehalts des Käsebruchstroms hingeregelt wird.

Es hat sich überraschend gezeigt, daß durch diese Verfahrensmaßnahmen eine weitgehend konstante Einhaltung eines vorbestimmten Sollwerts des Trockenmassegehalts in dem Käsebruchstrom mit erträglichem Aufwand an Meß- und Regelungsmitteln möglich wird.

Das Verfahren kann insbesondere in der Weise durchgeführt werden, daß unter Verwendung des den Trockenmasesgehalt in dem Zustrom der gesäuerten Milch repräsentierenden Meßwerts ein Sollwert des Durchsatzes mindestens eines der Teilströme bestimmt wird nach der Formel

$$(I) \qquad \dot{m}_{\text{teilstrom - soll}} = f\,(\dot{m}_{\text{mix}};\ TM_{\text{mix}};\ TM_{\text{curd}};\ TM_{\text{molke}}),$$

wobei in dieser Formel bedeuten

| | |
|---|---|
| $\dot{m}_{\text{teilstrom- soll}}$ | den Sollwert des jeweiligen Teilstromdurchsatzes pro Zeiteinheit, auf den hin der Istwert dieses Teilstromdurchsatzes geregelt werden muß, damit der gewünschte Trockenmassegehalt des Käsebruchstroms sich einstellt, |
| $\dot{m}_{\text{mix}}$ | den Durchsatz des Zustroms gesäuerter Milch pro Zeiteinheit, |
| $TM_{\text{mix}}$ | den jeweils ermittelten vom Gas- und Luftgehalt unabhängigen Trockenmassegehalt des Zustroms von gesäuerter Milch, |
| $TM_{\text{curd}}$ | den gewünschten Trockenmassegehalt des Käsebruchstroms, welcher vorgegeben wird, |
| $TM_{\text{molke}}$ | den Trockenmassegehalt des Molkestroms, |

wobei $TM_{\text{mix}}$ laufend gemessen wird,

wobei weiter $TM_{\text{molke}}$ ggf. laufend gemessen oder als konstant angenommen wird,

und wobei $\dot{m}_{\text{mix}}$ ggf. laufend gemessen oder als konstant angenommen wird,

und daß der nach dieser Formel ermittelte Sollwert des Durchsatzes des jeweiligen Teilstroms mit dem Istwert des Durchsatzes pro Zeiteinheit dieses Teilstroms verglichen wird und aufgrund dieses Sollwert-/Istwertvergleichs der Durchsatz des jeweiligen Teilstroms auf Kleinhaltung der Istwert-/Sollwertdifferenz hingeregelt wird.

Auf die Notwendigkeit einer laufenden Messung des Trockenmassegehalts der Molke kann häufig verzichtet werden, da der Trockenmassegehalt der Molke nur geringen Schwankungen unterliegt und deshalb ohne wesentliche Beeinträchtigung des Endergebnisses als konstant angenommen werden kann.

Auch auf eine laufende Kontrolle des Durchsatzes pro Zeiteinheit des Zustroms gesäuerter Milch kann ggf. verzichtet werden, wenn durch geeignete Ausbildung des Zulaufs die Zulaufmenge pro Zeiteinheit annähernd konstant gehalten werden kann. Wenn man beispielsweise den Zulauf aus einem schwimmergesteuerten Zulaufbehälter konstanten Niveaus durch eine konstante Gefällestrecke zu der Trennvorrichtung erfolgen läßt, so kann man mit einer konstanten Zulaufmenge pro Zeiteinheit rechnen.

Der Durchsatz des jeweils für den Regelungseingriff gewählten Teilstroms kann durch ein einstellbares Drosselorgan in der diesen Teilstrom führenden Leitung beeinflußt werden.

Bevorzugt ermittelt man insbesondere bei Einsatz eines Zentrifugalseparators den Sollwert des Durchsatzes pro Zeiteinheit des Molkestroms nach der Formel

$$(II) \qquad \dot{m}_{\text{molke-soll}} = \frac{TM_{\text{curd}} - TM_{\text{mix}}}{TM_{\text{curd}} - TM_{\text{molke}}} \cdot \dot{m}_{\text{mix}},$$

wobei $\dot{m}_{\text{molke- soll}}$ den Sollwert des Molkestroms pro Zeiteinheit bedeutet, auf den zur Erzielung des gewünschten Trockenmassegehalts des Käsebruchstroms hingeregelt wird und die übrigen Symbole die gleichen Bedeutungen haben, wie nach Formel I angegeben, wobei $TM_{\text{mix}}$ laufend gemessen wird,

wobei weiter $TM_{\text{molke}}$ ggf. laufend gemessen oder aber als konstant angenommen wird und

wobei $\dot{m}_{\text{mix}}$ ggf. laufend gemessen oder als konstant angenommen wird.

Es hat sich gezeigt, daß durch Sollwert-/Istwertvergleich des Durchsatzes pro Zeiteinheit des Molkestroms eine besonders feinfühlige Regelung des Trockenmassegehalts in dem Käsebruchstrom möglich wird.

Bei Einsatz einer Membrantrennvorrichtung, wie sie beispielsweise in der deutschen Patentschrift 38 19 704 im einzelnen beschrieben ist, kann aber auch der Durchsatz des Retentatstroms pro Zeiteinheit laufend gemessen und dieser Durchsatz mit einem laufend ermittelten Solldurchsatz des Retentatstroms verglichen werden. Wenn hier von Retentatstrom gesprochen wird, so deshalb, weil bei einer Membrantrennvorrichtung der aus der DE-PS 38 19 704 bekannten Art der Retentatstrom möglicherweise noch nicht den endgültigen Käsebruchstrom darstellt, der zur unmittelbaren Weiterverarbeitung zu Frischkäse geeignet ist.

Die zusätzliche Dichtebestimmung des Zustroms der gesäuerten Milch kann nach verschiedenen bekannten Meßmethoden durchgeführt werden. Es hat sich aber gezeigt, daß man eine besonders zuverlässige Überwachung des von Gas- und Lufteinschlüssen unabhängigen Trockenmassegehalts des Zustroms gesäuerter Milch dann erhält, wenn man als zusätzliche Dichtebestimmung neben der Mikrowellentransmissionsbestimmung eine Strahlungsabsorptionsmessung anwendet, insbesondere unter Verwendung eines radio-aktiven Strahlers, etwa eines Gammastrahlers wie Cs-137.

Im Falle einer solchen Kombination einer Mikrowellentransmissionsmessung und einer Strahlungsabsorptionsmessung kann man beispielsweise so verfahren, daß der vom Luft- und Gasgehalt des Zustroms der gesäuerten Milch unabhängige, den Trockenmassegehalt dieses Zustroms repräsentierende Meßwert ermittelt wird nach der Formel

$$(III) \qquad TM_{mix} = 1 - A \cdot \frac{\phi}{\ln\frac{Io}{I}}$$

wobei

$TM_{mix}$ wieder die nach Formel I angegebene Bedeutung hat und wobei weiter bedeuten

$\phi$ eine durch ein Mikrowellentransmissionsmeßgerät gemessene Phasenverschiebung der Mikrowellenstrahlung nach dem Durchgang durch den Zustrom der gesäuerten Milch,

ln Logarithmus naturalis,

I die nach dem Durchgang durch den Zustrom gemessene Strahlungsintensität einer von einem Gammastrahler oder dergleichen (Cs-137) ausgehenden Strahlung,

Io einen konstanten Leermeßwert entsprechend der Strahlungsintensität nach Durchgang der Strahlung des Gammastrahlers durch die leere Leitung des Zustroms und

A ein Kalibrierparameter.

Der nach Formel III laufend ermittelte vom Luft- und Gasgehalt unabhängige Trockenmassegehalt des Zustroms gesäuerter Milch kann dann ohne weiteres in die Formel I oder in die Formel II eingesetzt werden.

Die Erfindung betrifft ausgehend von dem oben diskutierten Stand der Technik weiterhin eine Einrichtung zum kontinuierlichen Trennen eines Zustroms gesäuerter Milch in zwei Teilströme, nämlich einen Käsebruchstrom und einen Molkestrom, umfassend eine Trennvorrichtung, einen Zulauf für den Zustrom der gesäuerten Milch zu der Trennvorrichtung, einen Ablauf für den Käsebruchstrom bzw. Retentatstrom von der Trennvorrichtung, einen Ablauf für den Molkestrom von der Trennvorrichtung, ein Einstellorgan zur Einstellung des Durchsatzes pro Zeiteinheit durch mindestens einen der Abläufe zur Einstellung des Trockenmassegehalts in dem Käsebruchstrom.

Es besteht auch bezüglich dieser Einrichtung wieder die Forderung, diese so auszubilden, daß mit erhöhter Genauigkeit ein konstanter Wert des Trockenmassegehalts in dem Käsebruchstrom eingehalten wird. Zur Lösung dieser Aufgabe wird die Trennvorrichtung mit einer Meßeinrichtung zur Ermittlung des vom Luft- und Gasgehalt unabhängigen Trockenmassegehalts in dem Zustrom ausgeführt, und zwar mit einer Meßeinrichtung beruhend einerseits auf einer Mikrowellentransmissionsmessung und andererseits auf einer zusätzlichen Dichtemessung des Zustroms der gesäuerten Milch. Das in der Meßeinrichtung durch elektrische Verknüpfung der beiden Meßwerte gewonnene Meßergebnis wird schaltungsmäßig mit dem Einstellorgan zur Konstanthaltung des Trockenmassegehalts in dem Käsebruchstrom verknüpft.

Beispielsweise kann die Meßeinrichtung mit einem Prozessor ausgeführt sein, welcher nach der Formel

$$(I) \qquad \dot{m}_{teilstrom - soll} = f\,(\dot{m}_{mix};\; TM_{mix};\; TM_{curd};\; TM_{molke})$$

den Sollwert des Durchsatzes pro Zeiteinheit eines Teilstroms durch einen der Abläufe ermittelt, auf den dieser Teilstrom eingestellt werden muß, damit ein gewünschter vorgegebener Trockenmassegehalt des Käsebruchstroms erzielt wird, wobei die einzelnen Größen die nach Formel I angegebenen Bedeutungen haben, wobei dieser Prozessor mit der Meßeinrichtung zur Ermittlung des vom Gas- und Luftgehalt unabhängigen Trockenmassegehalts in dem Zustrom des Käsebruchs und mit einem Einstellglied zur Eingabe des gewünschten Trockenmassegehalts des Käsebruchstroms verbunden ist und wobei dieser Prozessor ggf. ferner mit Meßgeräten verbunden ist, welche den Trockenmassegehalt der Molke und den Durchsatz des Zustroms pro Zeiteinheit ermitteln, sofern der Trockenmassegehalt der Molke und/oder der Durchsatz des Zustroms pro Zeiteinheit nicht als konstant angenommen werden können, daß der Prozessor mit dem Eingang eines Komparators verbunden ist, daß ein zweiter Eingang dieses Komparators mit einem Meßgerät zur Bestimmung des Ist-Durchsatzes pro Zeiteinheit des einen Teilstroms verbunden ist und daß ein Ausgang des Komparators mit dem Stellorgan verbunden ist.

Kann der Trockenmassegehalt der Molke als konstant angenommen werden, so genügt es, den Prozessor mit einer zusätzlichen elektrischen Eingabevorrichtung zu verbinden, die ein dem Trockenmassegehalt der Molke entsprechendes elektrisches Signal an den Prozessor anlegt. Das gleiche gilt für den Durchsatz des Zustroms pro Zeiteinheit. Wenn dieser als konstant angenommen werden kann, so genügt es, eine weitere elektrische Signaleingabevorrichtung vorzusehen, welche ein den konstanten Durchsatz des Zustroms repräsentierendes elektrisches Signal an den Prozessor anlegt. Der Komparator kann in üblicher Weise als eine Brückenschaltung mit nachgeordnetem Verstärker ausgebildet sein, wobei die Endstufe des Verstärkers auf das Stellorgan einwirkt.

Aus den weiter oben im Zusammenhang mit dem Verfahren angegebenen Gründen besteht eine bevorzugte Variante der erfindungsgemäßen Einrichtung darin, daß der Prozessor zur Berechnung des Solldurchsatzes pro Zeiteinheit des Molkestroms nach der Formel

$$\text{(II)} \qquad \dot{m}_{molke\text{-}soll} = \frac{TM_{curd} - TM_{mix}}{TM_{curd} - TM_{molke}} \cdot \dot{m}_{mix}$$

ausgebildet ist, wobei die in dieser Formel verwendeten Symbole die nach den Formeln I und II weiter oben angegebenen Bedeutungen haben.

Eine bevorzugte Ausbildung der Meßeinrichtung zur Bestimmung des Trockenmassegehalts des Zustroms gesäuerter Milch besteht darin, daß die Meßeinrichung zur Bestimmung des vom Gas- und Luftgehalt unabhängigen Trockenmassegehalts des Zustroms der gesäuerten Milch ein Mikrowellentransmissionsmeßgerät, ein mit radio-aktiver Strahlung arbeitendes Strahlungabsorptionsmeßgerät und einen weiteren Prozessor umfaßt, welcher aus den Meßergebnissen der beiden Meßgeräte den vom Gas- und Luftgehalt unabhängigen Meßwert für den Trockenmassegehalt des Zustroms gesäuerter Milch ermittelt.

Es hat sich gezeigt, daß der Trockenmassegehalt unverfälscht durch Gas- und Lufteinschlüsse mit verhältnismäßig geringem Rechneraufwand hinreichend genau bestimmt werden kann, wenn der weitere Prozessor zur Ermittlung des vom Gas- und Luftgehalt unabhängigen Meßwerts des Trockenmassegehalts in dem Zustrom gesäuerter Milch nach der nachstehenden Formel

$$\text{(III)} \qquad TM_{mix} = 1 - A \cdot \frac{\phi}{\ln\frac{Io}{o}}$$

ausgebildet ist, wobei die in dieser Formel verwendeten Symbole die gleichen Bedeutungen haben wie oben nach den Formeln I und III angegeben.

Das im Zusammenhang mit der Erfindung angewandte Verfahren zur Ermittlung des vom Gas- und Luftgehalt unabhängigen Trockenmassegehalts eines Stroms von gesäuerter Milch kann grundsätzlich auch außerhalb des erfindungsgemäßen Verfahrens und der erfindungsgemäßen Einrichtung angewandt werden in der Weise, daß zum einen eine Mikrowellentransmissionsmessung und zum anderen eine zusätzliche Dichtemessung an dem Strom gesäuerter Milch durchgeführt werden und die Meßergebnisse elektrisch miteinander verknüpft werden. Dabei geht man wieder bevorzugt davon aus, daß die zusätzliche Dichtemessung auf der Absorption radio-aktiver Strahlung in dem Strom gesäuerter Milch beruht.

Beispielsweise können die Ergebnisse der Mikrowellentransmissionsmessung und der Strahlungsabsorptionsmessung nach der nachstehenden Formel

$$\text{(III)} \qquad TM_{mix} = 1 - A \cdot \frac{\phi}{\ln\frac{Io}{o}}$$

miteinander verknüpft werden, wobei die einzelnen Symbole in dieser Formel die oben nach den Formeln I und III angegebenen Bedeutungen haben.

Zur Durchführung eines solchen Meßverfahrens bedient man sich mit Vorteil einer Meßeinrichtung, gekennzeichnet durch ein Mikrowellentransmissionsmeßgerät und ein mit radio-aktiver Strahlung arbeitendes Strahlungsabsorptionsmeßgerät in Meßposition an einer die gesäuerte Milch führenden Leitungsstrecke sowie einen Prozessor zur elektrischen Verknüpfung der von den beiden Meßgeräten gewonnenen Meßergebnisse.

Beispielsweise kann der Prozessor zur elektrischen Verknüpfung der Meßergebnisse der beiden Meßgeräte nach der nachstehenden Formel

$$\text{(III)} \qquad TM_{mix} = 1 - A \cdot \frac{\phi}{\ln\frac{Io}{o}}$$

ausgebildet sein, wobei die Symbole dieser Formel die oben nach den Formeln I und III angegebenen Bedeutungen haben.

Zur Erläuterung des Begriffs "gesäuerte Milch" sei ergänzend die englische Bezeichnung "sour mix" genannt; zur Erläuterung des Begriffs "Käsebruch" sei ergänzend die englische Bezeichnung "curd" genannt.

Wenn vorstehend wiederholt vom Durchsatz pro Zeiteinheit die Rede ist, so ist jeweils der Volumendurchsatz pro Zeiteinheit gemeint.

Wenn in der vorstehenden Beschreibung von "Membrantrennvorrichtung" die Rede war, so ist hierbei an Mikrofiltrationseinrichtungen, Ultrafiltrationseinrichtungen und Umkehrosmoseanlagen gedacht.

Die beiliegenden Figuren erläutern die Erfindung anhand von Ausführungsbeispielen; es stellen dar:

Figur 1     eine Trennanlage zur Trennung von gesäuerter Milch in Käsebruch und Molke, beruhend auf der Verwendung einer Zentrifuge;

Figur 2 eine Anlage zur Trennung von gesäuerter Milch in Käsebruch und Molke, beruhend auf der Verwendung einer Ultrafiltrationsanlage und

Figur 3 das Schema einer Meßeinrichtung zur gas- und luftunabhängigen Messung des Trockenmassegehalts eines Stroms von gesäuerter Milch.

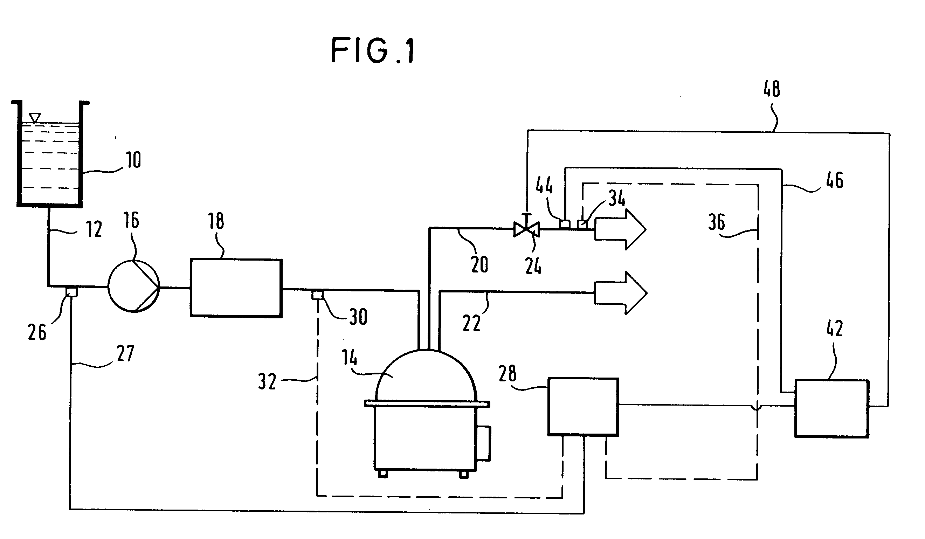

In Figur 1 ist mit 10 ein Vorratsbehälter für gesäuerte Milch bezeichnet. Von diesem Vorratsbehälter 10 führt eine Leitung 12 zu einer Zentrifuge 14. In der Leitung 12 ist eine Pumpe 16 und ein Wärmetauscher 18 zum Thermisieren der gesäuerten Milch vorgesehen. Von der Zentrifuge 14 geht eine Molkeablaufleitung 20 und eine Käsebruchablaufleitung 22 weg. In der Molkeablaufleitung 20 ist ein Drosselventil 24 vorgesehen. An der Leitung 12 liegt weiter eine Trockengehaltsmeßeinrichtung 26, auf die noch näher einzugehen sein wird. Diese Trockengehaltsmeßeinrichtung 26 liefert über eine Leitung 27 ein Signal an einen Prozessor 28. Zusätzlich können vorgesehen sein:

Ein Durchsatzmeßgerät 30 an der Leitung 12, welches den Durchsatz an gesäuerter Milch bestimmt ( $\dot{m}_{mix}$ ) und über eine Leitung 32 an den Prozessor 28 angeschlossen ist, ein Trockenmassesensor 34, welcher den Trockenmassgehalt der Molke in der Leitung 20 bestimmt und über eine Leitung 36 mit dem Prozessor 28 verbunden ist. Die Meßfühler 30, 34 sind, wie eingangs gesagt, nicht unbedingt erforderlich. Soweit die durch die Meßfühler 30 und 34 zu messenden Größen als konstant erwartet werden können, kann man auf die Messung verzichten und entsprechend manuell einstellbare Eingänge an dem Prozessor 28 vorsehen. Der Prozessor 28 liefert einen Sollwert für den Durchsatz der Molke durch die Leitung 20. Dieser Sollwert wird in einem Komparator 42 verglichen mit dem Istwert des Molkedurchsatzes durch die Leitung 20, der mittels eines Durchsatzfühlers 44 ermittelt und über eine Leitung 46 an den Komparator 42 geliefert wird.

Der Ausgang des Komparators 42 liefert ein Fehlersignal aufgrund des Sollwert-/Istwertvergleichs, das zur Regelung des Drosselventils 24 auf eine Leitung 48 gegeben wird, so daß das Drosselventil auf konstanten Trockenmassegehalt am Ausgang der Leitung 22 hingeregelt wird.

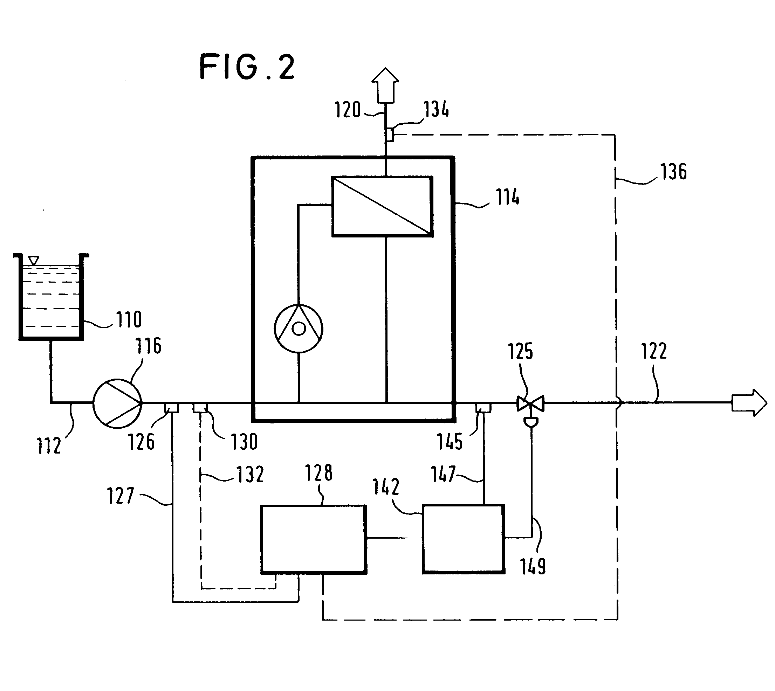

In Figur 2 ist anstelle der Zentrifuge 14 eine einstufige Ultrafiltrationsanlage 114 vorgesehen, die an sich bekannt ist, nämlich aus der DE-PS 38 19 704.

Analoge Anlagenteile sind mit den gleichen Bezugszeichen versehen, jeweils vermehrt mit der Zahl 100.

Abweichend von der Anlage gemäß Figur 1 befindet sich das Drosselventil 125 in der den Käsebruch führenden Leitung 122. Dementsprechend ist das Durchflußmeßgerät 145 an der Leitung 122 angebracht und durch die Leitung 147 mit dem Komparator 142 verbunden. Von dem Komparator 142 führt hier die Leitung 149 zu dem Drosselventil 125.

In diesem Ausführungsbeispiel wird der Sollwert des Käsebruchdurchsatzes durch die Leitung 122 mittels des Prozessors 128 bestimmt. Dieser Sollwert wird mit dem bei 145 gemessenen Istwert des Durchsatzes durch die Leitung 122 verglichen und das Fehlersignal am Ausgang des Komparators 142 wird über die Leitung 149 an das Drosselventil 125 zurückgekoppelt, so daß dieses auf einen konstanten Trockenmassegehalt in dem Käsebruch gewährleistenden Durchsatz hin geregelt wird.

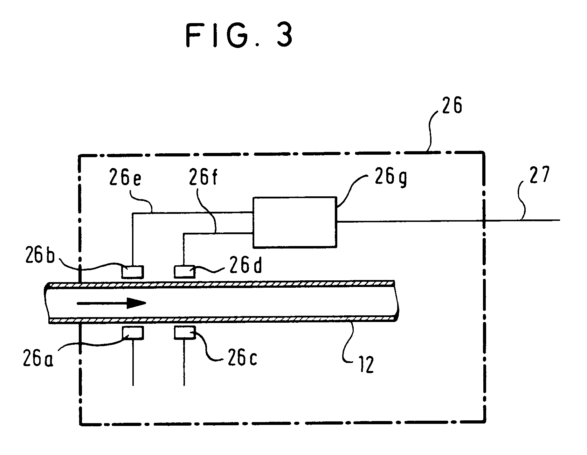

In Figur 3 ist die Meßeinrichtung 26 im einzelnen dargestellt. Die gleiche Meßeinrichtung kann an der Stelle 126 der Figur 2 eingesetzt werden. Man erkennt in der Meßeinrichtung einen Abschnitt der den Strom gesäuerter Milch führenden Leitung 12. An dieser Leitung 12 ist ein Mikrowellensender 26a angebracht. Diesem Mikrowellensender 26a steht ein Mikrowellenempfänger 26b gegenüber, so daß die Transmissionsstrecke durch die Leitung 12 hindurch verläuft. Die Mikrowellenempfangsantenne 26b gestattet es, die Intensität und/oder die Phasenverschiebung der Mikrowellenstrahlung nach dem Durchgang durch die Leitung 12 zu bestimmen. Hierzu ist natürlich Voraussetzung, daß die Leitung 12 aus einem mikrowellendurchläßigen Material besteht.

Weiter umfaßt die Meßeinrichtung 26 einen Gammastrahler 26c, beispielsweise einen Cs-137-Strahler, und diesem gegenüber einen Strahlungsempfänger 26d. Der Strahlungsempfänger 26d empfängt die von dem Strahler 26c ausgesandte Strahlung, wobei die Intensität dieser Strahlung am Empfangsort durch die Absorption im Käsebruchstrom mehr oder minder stark geschwächt ist. Die Empfangsantenne 26b und der Strahlungsempfänger 26d liegen über die Leitungen 26e bzw. 26f am Eingang eines Prozessors 26g, der über die Leitung 27 mit dem Prozessor 28 verbunden ist. Der Prozessor 26g liefert dem Prozessor 28 ein elektrisches Signal, welches den vom jeweiligen Luft- und Gasgehalt des Käsebruchstroms unabhängigen Trockenmassegehalt des Käsebruchsztroms darstellt. Der Prozessor 26g ist dabei beispielsweise so aufgebaut, daß er nach der Formel III arbeitet, während der Prozessor 28 beispielsweise so aufgebaut ist, daß er nach der Formel II arbeitet.

**Patentansprüche**

1. Verfahren zum kontinuierlichen Trennen eines Zustroms (Leitung 12,112) von gesäuerter Milch in zwei Teilströme (Leitungen 20,120 und 22,122), nämlich einen Käsebruchstrom (Leitung 22,122) und einen Molkestrom (Leitung 20,120) mit Hilfe einer Trennvorrichtung (14,114), wobei der Durchsatz eines (Leitung 20,122) der Teilströme zur Beeinflußung des Trockenmassegehalts des Käsebruchstroms (Leitung 22,122) veränderbar ist,

**dadurch gekennzeichnet,**

daß in dem Zustrom (Leitung 12,112) der gesäuerten Milch ein deren Trockenmassegehalt repräsentierender, von dem Luft- und Gasgehalt des Zustroms (Leitung 12,112) der gesäuerten Milch unabhängiger Meßwert zum einen durch eine Mikrowellentransmissionsmessung und zum anderen durch eine zusätzliche Dichtemessung des Zustroms (Leitung 12,112) der gesäuerten Milch ermittelt wird und daß der Durchsatz pro Zeiteinheit mindestens eines der Teilströme (Leitungen 20,120 und 22,122) in Abhängigkeit von diesem Meßwert auf eine Konstanthaltung des Trockenmassegehalts des Käsebruchstroms (Leitung 22,122) hingeregelt wird.

2. Verfahren nach Anspruch 1,
**dadurch gekennzeichnet,**
daß unter Verwendung des den Trockenmassegehalt in dem Zustrom (Leitung 12,112) der gesäuerten Milch repräsentierenden Meßwerts ein Sollwert des Durchsatzes pro Zeiteinheit mindestens eines der Teilströme bestimmt wird nach der Formel

$$\text{(I)} \qquad \dot{m}_{\text{teilstrom - soll}} = f\,(\dot{m}_{\text{mix}};\ TM_{\text{mix}};\ TM_{\text{curd}};\ TM_{\text{molke}}),$$

wobei in dieser Formel bedeuten

| | |
|---|---|
| $\dot{m}_{\text{teilstrom- soll}}$ | den Sollwert des jeweiligen Teilstromdurchsatzes pro Zeiteinheit, auf den hin der Istwert dieses Teilstromdurchsatzes geregelt werden muß, damit der gewünschte Trockenmassegehalt des Käsebruchstroms sich einstellt, |
| $\dot{m}_{\text{mix}}$ | den Durchsatz des Zustroms gesäuerter Milch pro Zeiteinheit, |
| $TM_{\text{mix}}$ | den jeweils ermittelten vom Gas- und Luftgehalt unabhängigen Trockenmassegehalt des Zustroms von gesäuerter Milch, |
| $TM_{\text{curd}}$ | den gewünschten Trockenmassegehalt des Käsebruchstroms, welcher vorgegeben wird, |
| $TM_{\text{molke}}$ | den Trockenmassegehalt des Molkestroms, |

wobei $TM_{\text{mix}}$ laufend gemessen wird,
wobei weiter $TM_{\text{molke}}$ ggf. laufend gemessen oder als konstant angenommen wird,
und wobei $\dot{m}_{\text{mix}}$ ggf. laufend gemessen oder als konstant angenommen wird,
und daß der nach dieser Formel ermittelte Sollwert des Durchsatzes des jeweiligen Teilstroms mit dem Istwert des Durchsatzes pro Zeiteinheit dieses Teilstroms verglichen wird und aufgrund dieses Sollwert-/Istwertvergleichs der Durchsatz des jeweiligen Teilstroms auf Kleinhaltung der Istwert-/Sollwertdifferenz hingeregelt wird.

3. Verfahren nach Anspruch 2,
**dadurch gekennzeichnet,**
daß der jeweilige Durchsatz durch ein einstellbares Drosselventil (24 bzw. 125) geregelt wird.

4. Verfahren nach einem der Ansprüche 2 und 3,
**dadurch gekennzeichnet,**
daß der Sollwert des Durchsatzes pro Zeiteinheit des Molkestroms bestimmt wird nach der Formel

$$\text{(II)} \qquad \dot{m}_{\text{molke-soll}} = \frac{TM_{\text{curd}} - TM_{\text{mix}}}{TM_{\text{curd}} - TM_{\text{molke}}} \cdot \dot{m}_{\text{mix}},$$

wobei $\dot{m}_{\text{molke- soll}}$ den Sollwert des Molkestroms bedeutet, auf den zur Erzielung des gewünschten Trockenmassegehalts des Käsebruchstroms hingeregelt wird und die übrigen Symbole die gleichen Bedeutungen haben, wie in Anspruch 2 angegeben, wobei $TM_{\text{mix}}$ laufend gemessen wird,
wobei weiter $TM_{\text{molke}}$ ggf. laufend gemessen oder aber als konstant angenommen wird und
wobei $\dot{m}_{\text{mix}}$ ggf. laufend gemessen oder als konstant angenommen wird.

5. Verfahren nach einem der Ansprüche 1 bis 4,

**dadurch gekennzeichnet,**
daß als Trennvorrichtung eine Zentrifuge (14) verwendet wird.

6. Verfahren nach Anspruch 5,
   **dadurch gekennzeichnet,**
   daß im Falle der Verwendung einer Zentrifuge (14) als Trennvorrichtung der Durchsatz des Molkestroms (Leitung 20) geregelt wird.

7. Verfahren nach einem der Ansprüche 1 bis 4,
   **dadurch gekennzeichnet,**
   daß als Trennvorrichtung eine Membrantrennvorrichtung (114) verwendet wird.

8. Verfahren nach Anspruch 7,
   **dadurch gekennzeichnet,**
   daß im Falle der Verwendung einer Membrantrennvorrichtung (114) als Trennvorrichtung der Durchsatz des Retentatstroms (Leitung 122) geregelt wird.

9. Verfahren nach einem der Ansprüche 1 bis 8,
   **dadurch gekennzeichnet,**
   daß die zusätzliche Dichtebestimmung des Zustroms (Leitung 12,112) der gesäuerten Milch durch eine Strahlungsabsorptionsmessung insbesondere mittels eines radio-aktiven Strahlers (26c) durchgeführt wird.

10. Verfahren nach Anspruch 9,
    **dadurch gekennzeichnet,**
    daß der vom Luft- und Gasgehalt des Zustroms der gesäuerten Milch unabhängige, den Trockenmassegehalt dieses Zustroms repräsentierende Meßwert ermittelt wird nach der Formel

$$(III) \qquad TM_{mix} = 1 - A \cdot \frac{\phi}{\ln\frac{Io}{o}}$$

wobei

| | |
|---|---|
| $TM_{mix}$ | wieder die im Anspruch 2 angegebene Bedeutung hat und wobei weiter bedeuten |
| $\phi$ | eine durch ein Mikrowellentransmissionsmeßgerät gemessene Phasenverschiebung der Mikrowellenstrahlung nach dem Durchgang durch den Zustrom der gesäuerten Milch, |
| ln | Logarithmus naturalis |
| I | die nach dem Durchgang durch den Zustrom gemessene Strahlungsintensität einer von einem Gammastrahler oder dergleichen (Cs-137) ausgehenden Strahlung, |
| Io | einen konstanten Leermeßwert entsprechend der Strahlungsintensität nach Durchgang der Strahlung des Gammastrahlers durch die leere Leitung des Zustroms und |
| A | ein Kalibrierparameter. |

11. Einrichtung zum kontinuierlichen Trennen eines Zustroms gesäuerter Milch in zwei Teilströme, nämlich einen Käsebruchstrom und einen Molkestrom, umfassend eine Trennvorrichtung (14, 114), einen Zulauf (12,112) für den Zustrom der gesäuerten Milch zu der Trennvorrichtung (14,114), einen Ablauf (22,122) für den Käsebruchstrom bzw. Retentatstrom von der Trennvorrichtung (14,114), einen Ablauf (20,120) für den Molkestrom von der Trennvorrichtung (14,114), ein Einstellorgan (24,125) zur Einstellung des Durchsatzes durch mindestens einen (20,122) der Abläufe (22,122; 20,120) zur Einstellung des Trockenmassegehalts in dem Käsebruchstrom, **gekennzeichnet** durch eine Meßeinrichtung (26,126) zur Ermittlung des vom Luft- und Gasgehalt unabhängigen Trockenmassegehalts in dem Zustrom (12,112) beruhend auf einer Mikrowellentransmissionsmessung und einer zusätzlichen Dichtemessung des Zustroms der gesäuerten Milch und ferner gekennzeichnet durch eine schaltungsmäßige Verknüpfung zwischen dieser Meßeinrichtung (26,126) und dem Einstellorgan (24,125) zur Konstanthaltung des Trockenmassegehalts in dem Käsebruchstrom.

12. Einrichtung nach Anspruch 11,
    **gekennzeichnet** durch einen Prozessor (28,128),
    welcher nach der Formel

$$(I) \qquad \dot{m}_{teilstrom - soll} = f\,(\dot{m}_{mix};\ TM_{mix};\ TM_{curd};\ TM_{molke})$$

den Sollwert des Durchsatzes pro Zeiteinheit eines Teilstroms durch einen der Abläufe ermittelt, auf den dieser Teilstrom eingestellt werden muß, damit ein gewünschter vorgegebener Trockenmassegehalt des Käsebruchstroms erzielt wird,
wobei die einzelnen Größen die im Anspruch 2 angegebenen Bedeutungen haben,
wobei dieser Prozessor (28,128) mit der Meßeinrichtung (26, 126) zur Ermittlung des vom Gas- und Luftgehalt unabhängigen Trockenmassegehalts in dem Zustrom des Käsebruchs und mit einem Einstellglied (24,25) zur Eingabe des gewünschten Trockenmassegehalts des Käsebruchstroms verbunden ist und wobei dieser Prozessor (28,128) ggf. ferner mit Meßgeräten (34,134; 30,130) verbunden ist, welche den Trockenmassegehalt der Molke und den Durchsatz des Zustroms pro Zeiteinheit ermitteln, sofern der Trockenmassegehalt der Molke und/oder der Durchsatz des Zustroms pro Zeiteinheit nicht als Konstante angenommen werden können, daß der Prozessor (28,128) mit dem Eingang eines Komparators (42,142) verbunden ist, daß ein zweiter Eingang dieses Komparators (42,142) mit einem Meßgerät (44,145) zur Bestimmung des Ist-Durchsatzes pro Zeiteinheit des einen Teilstroms verbunden ist und daß ein Ausgang (48,149) des Komparators mit dem Stellorgan (24,125) verbunden ist.

13. Einrichtung nach Anspruch 12,
   **dadurch gekennzeichnet,**
   daß der Prozessor (28) zur Berechnung des Solldurchsatzes pro Zeiteinheit des Molkestroms (Leitung 20) nach der Formel

$$(II) \qquad \dot{m}_{molke\text{-}soll} = \frac{TM_{curd} - TM_{mix}}{TM_{curd} - TM_{molke}} \cdot \dot{m}_{mix}$$

   ausgebildet ist, wobei die in dieser Formel verwendeten Symbole die in den Ansprüchen 2 und 4 angegebenen Bedeutungen haben.

14. Einrichtung nach einem der Ansprüche 11 bis 13,
   **dadurch gekennzeichnet,**
   daß die Meßeinrichung (26) zur Bestimmung des vom Gas- und Luftgehalt unabhängigen Trockenmassegehalts des Zustroms (Leitung 12) der gesäuerten Milch ein Mikrowellentransmissionsmeßgerät (26a,26b), ein mit radio-aktiver Strahlung arbeitendes Strahlungabsorptionsmeßgerät (26c,26d) und einen weiteren Prozessor (26g) umfaßt, welcher aus den Meßergebnissen der beiden Meßgeräte (26a,26b; 26c,26d) den vom Gas- und Luftgehalt unabhängigen Meßwert für den Trockenmassegehalt des Zustroms gesäuerter Milch (Leitung 12) ermittelt.

15. Einrichtung nach Anspruch 14,
   **dadurch gekennzeichnet,**
   daß der weitere Prozessor (26g) zur Ermittlung des vom Gas- und Luftgehalt unabhängigen Meßwerts des Trockenmassegehalts in dem Zustrom gesäuerter Milch (Leitung 12) nach der nachstehenden Formel

$$(III) \qquad TM_{mix} = 1 - A \cdot \frac{\phi}{\ln\frac{Io}{o}}$$

   ausgebildet ist, wobei die in dieser Formel verwendeten Symbole die gleiche Bedeutung haben wie in den Ansprüchen 2 und 10 angegeben.

16. Verfahren zur Ermittlung des vom Gas- und Luftgehalt unabhängigen Trockenmassegehalts eines Stroms von gesäuerter Milch (Leitung 12),
   **dadurch gekennzeichnet,**
   daß zum einen eine Mikrowellentransmissionsmessung und zum anderen eine zusätzliche Dichtemessung an dem Strom gesäuerter Milch (Leitung 12) durchgeführt werden und die Meßergebnisse elektrisch miteinander verknüpft werden.

17. Verfahren nach Anspruch 16,
   **dadurch gekennzeichnet,**
   daß die zusätzliche Dichtemessung auf der Absorption radio-aktiver Strahlung in dem Strom gesäuerter Milch (Leitung 12) beruht.

18. Verfahren nach den Ansprüchen 16 oder 17,
   **dadurch gekennzeichnet,**
   daß die Ergebnisse der Mikrowellentransmissionsmessung und der Strahlungsabsorptionsmessung nach der nachstehenden Formel

$$\text{(III)} \qquad TM_{mix} = 1 - A \cdot \frac{\phi}{\ln\dfrac{lo}{o}}$$

miteinander verknüpft werden, wobei die einzelnen Symbole in dieser Formel die in den Ansprüchen 2 und 10 angegebenen Bedeutungen haben.

19. Einrichtung zur Ermittlung des vom Gas- und Luftgehalt unabhängigen Trockenmassegehalts eines Stroms gesäuerter Milch, **gekennzeichnet** durch ein Mikrowellentransmissionsmeßgerät (26a,26b) und ein mit radio-aktiver Strahlung arbeitendes Strahlungsabsorptionsmeßgerät (26c,26d) in Meßposition an einer die gesäuerte Milch führenden Leitungsstrecke (12) sowie einen Prozessor (26g) zur elektrischen Verknüpfung der von den beiden Meßgeräten (26a,26b; 26c,26d) gewonnenen Meßergebnisse.

20. Einrichtung nach Anspruch 19
**dadurch gekennzeichnet**,
daß der Prozessor (26g) zur elektrischen Verknüpfung der Meßergebnisse der beiden Meßgeräte (26a,26b;26c,26d) nach der nachstehenden Formel

$$\text{(III)} \qquad TM_{mix} = 1 - A \cdot \frac{\phi}{\ln\dfrac{lo}{o}}$$

ausgebildet ist, wobei die Symbole dieser Formel die in den Ansprüchen 2 und 10 angegebenen Bedeutungen haben.

## Claims

1. A method of continuously separating a supplied flow (pipe 12, 112) of acidulated milk into two partial flows (pipes 20, 120 and 22, 122), namely a stream of cheese curd (pipe 22, 122,) and a stream of whey (pipe 20, 120) by means of a separating device (14, 114), the throughput of one (pipe 20, 122) of the partial flows being capable of variation for influencing the dry mass content of the stream of cheese curd (pipe 22, 122),
**characterised in that**
in the supplied flow (pipe 12, 112) of acidulated milk a measured value is ascertained which represents its dry mass content and which is independent of the air and gas content of the supplied flow (pipe 12, 112) of acidulated milk, on the one hand by a microwave transmission measurement and on the other by an additional measurement of the density of the supplied flow (pipe 12, 112) of acidulated milk and in that the throughput per unit of time of at least one of the partial flows (pipes 20, 120 and 22, 122) is regulated as a function of this measured value in order to maintain constant the dry mass content of the flow of cheese curd (pipe 22, 122).

2. A method according to Claim 1,
**characterised in that**
using the measured value which represents the dry mass content in the supplied flow (pipe 12, 112) of acidulated milk, a desired value is ascertained for the throughput per unit of time of at least one of the partial flows, according to the formula

$$\text{(I)} \qquad \dot{m}_{des.part.flow} = f\,(\dot{m}_{mix}; DM_{mix}; DM_{curd}; DM_{whey}),$$

in which

$\dot{m}_{des.part.flow}$     is the desired value of the relevant throughput of partial flow per unit of time to which the actual value of this partial flow throughout is regulated so that the desired dry mass content of the cheese curd flow can be established,

$\dot{m}_{mix}$     is the throughput of supplied flow of acidulated milk per unit of time,

$DM_{mix}$     is the respectively ascertained dry mass content of the supplied flow of acidulated milk independently of the gas and air content,

$DM_{curd}$     represents the desired dry mass content of the cheese curd flow which is predetermined,

$DM_{whey}$     is the dry mass content of the whey flow,

where $DM_{mix}$ is constantly measured and furthermore where $DM_{whey}$ may possibly be continuously measured or is assumed to be constant
and where $\dot{m}_{mix}$ is possibly measured continually or is assumed to be constant,

and where the desired throughput of the relevant partial flow ascertained by this formula is compared with the actual value of the throughput of this partial flow per unit of time and on a basis of this desired value/actual value comparison so the throughput of the relevant partial flow is regulated to minimise the difference between the actual value and the desired value.

3. A method according to Claim 2,
**characterised in that**
the relevant throughput is regulated by an adjustable throttle valve (24 or 125).

4. A method according to one of Claims 2 and 3,
**characterised in that**
the desired value for the throughput of whey per unit of time is determined by the formula

$$(\text{II}) \qquad \dot{m}_{des.whey} = \frac{DM_{curd} - DM_{mix}}{DM_{curd} - DM_{whey}} \cdot \dot{m}_{mix,}$$

where $\dot{m}_{des.whey}$ denotes the desired rate of whey flow used as a basis of control in order to achieve the desired dry mass content in the curd flow while the other symbols have the same significance as indicated in Claim 2,
and where $DM_{mix}$ is constantly measured
and where furthermore $DM_{whey}$ is possibly constantly measured or is assumed to be constant and
where $\dot{m}_{mix}$ is possibly constantly measured or is assumed to be constant.

5. A method according to one of Claims 1 to 4,
**characterised in that**
a centrifuge (14) is used as the separating device.

6. A method according to Claim 5,
**characterised in that**
in the event of a centrifuge (14) being used as the separating device the throughput of whey flow (pipe 20) is regulated.

7. A method according to one of Claims 1 to 4,
**characterised in that**
a membrane separating device (114) is used as the separating device.

8. A method according to Claim 7,
**characterised in that**
if a membrane device (114) is used as a separating device, it is the throughput of retentate flow (pipe 122) which is regulated.

9. A method according to one of Claims 1 to 8,
**characterised in that**
the additional determination of the density of the supplied flow (pipe 12, 112) of acidulated milk is carried out by radiation absorption measurement, particularly by means of a radioactive radiation system (26c).

10. A method according to Claim 9,
**characterised in that**
the measured value representing the dry mass content of this supplied flow and independent of the air and gas content of the supplied flow of acidulated milk is ascertained by the formula

$$(\text{III}) \qquad DM_{mix} = 1 - A \cdot \frac{\phi}{\ln\frac{Io}{I}}$$

in which
$DM_{mix}$      again has the significance indicated in Claim 2 and where furthermore
$\phi$      is a phase displacement of microwave radiation measured by a microwave transmission measuring instrument after passing through the supplied flow of acidulated milk,
ln      is logarithmus naturalis
I      is the intensity of radiation of rays emerging from a gamma ray emitter or the like (Cs-137), measured after passing through the supplied flow,
Io      is a constant neutral measured value corresponding to the intensity of radiation after passage of the radiation from the gamma radiator through the empty supplied flow pipe and

A is a calibration parameter.

11. An apparatus for the continuous separation of a supplied flow of acidulated milk into two partial flows, namely a flow of cheese curd and a flow of whey, comprising a separating device (14, 114), a feed (12, 112) for the supplied flow of acidulated milk to the separating device (14, 114), a discharge (22, 122) for the flow of cheese curd or flow of retentate from the separating device (14, 114), a discharge (20, 120) for the flow of whey from the separating device (14, 114), a means (24, 125) for setting the throughput through at least one (20, 122) of the discharges (22, 122; 20, 120) in order to adjust the dry mass content in the cheese curd flow,
**characterised by** a measuring device (26, 126) for ascertaining the dry mass content in the supply flow (12, 112) independently of the air and gas content and based on a microwave transmission measurement and an additional density measurement of the supplied flow of acidulated milk and furthermore characterised by a circuitry link between the said measuring means (26, 126) and the adjusting means (24, 125) in order to maintain a constant dry mass content in the flow of cheese curd.

12. An apparatus according to Claim 11,
**characterised by** a processor (28, 128) which in accordance with the formula

$$\text{(I)} \qquad \dot{m}_{des.part.flow} = f\left(\dot{m}_{mix}; DM_{mix}; DM_{curd}; DM_{whey}\right),$$

ascertains the desired value for the throughput of a partial flow per unit of time through one of the discharges, to which this partial flow has to be adjusted in order to achieve a desired predetermined dry mass content in the flow of cheese curd,
where the individual magnitudes have the same significance as is indicated in Claim 2,
and where this processor (28, 128) is connected to the measuring means (26, 126) for ascertaining the dry mass content in the supply flow of cheese curd regardless of the gas and hair content and to means (24, 25) of adjusting the input of the desired dry mass content of the cheese curd flow and where this processor (28, 128) may possible be also connected to measuring instruments (34, 134; 30, 130) which ascertain the dry mass content of the whey and the throughput of the supplied flow per unit of time where the dry mass content of the whey and/or the throughput of the supply flow per unit of time cannot be assumed to be constant and in that the processor (28, 128) is connected to the input of a comparator (42, 142) and in that a second input of this comparator (42, 142) is connected to a measuring instrument (44, 145) for determining the actual throughput per unit of time of one partial flow and in that one output (48, 149) of the comparator is connected to the positioning device (24, 125).

13. An apparatus according to Claim 12,
**characterised in that**
the processor (28) is constructed to compute the desired throughput of whey flow (pipe 20) per unit of time according to the formula

$$\text{(II)} \qquad \dot{m}_{des.whey} = \frac{DM_{curd} - DM_{mix}}{DM_{curd} - DM_{whey}} \cdot \dot{m}_{mix}$$

where the symbols used in this formula have the same significance as indicated in Claims 2 and 4.

14. An apparatus according to Claims 11 to 13, characterised in that the measuring means (26) for determining the dry mass content of the supplied flow (pipe 12) of acidulated milk regardless of the gas and air content comprises a microwave transmission measuring instrument (26a, 26b), a radiation absorption meter (26c, 26d) which operates with radioactive radiation and a further processor (26g) which ascertains from the measured results from both measuring instruments (26a, 26b; 26c, 26d) the measured value for the dry mass content of the supplied flow of acidulated milk (pipe 12) independently of the gas and air content.

15. An apparatus according to Claim 14,
**characterised in that**
the further processor (26g) is constructed to ascertain the measured value of the dry mass content in the supplied flow of acidulated milk (pipe 12) independently of the gas and air content, in accordance with the following formula

$$\text{(III)} \qquad DM_{mix} = 1 - A \cdot \frac{\phi}{\ln\frac{Io}{I}}$$

where the symbols used in this formula have the same significance as in Claims 2 and 12.

16. A method of ascertaining the dry mass content, independently of the gas and air content, of a flow of acidulated milk (pipe 12),
**characterised in that**
on the one hand a microwave trasmission measurement and on the other an additional density measurement are carried out on the flow of acidulated milk (pipe 12) and in that the measurement results are interlinked electrically.

17. A method according to Claim 16,
**characterised in that**
the additional density measurement is based on the absorption of radioactive radiation in the flow of acidulated (pipe 12).

18. A method according to Claims 16 or 17,
**characterised in that**
the results of microwave transmission measurement and radiation absorption measurement are interlinked in accordance with the following formula

$$\text{(III)} \qquad DM_{mix} = 1 - A \cdot \frac{\phi}{\ln\frac{Io}{I}}$$

the individual symbols in this formula having the meaning indicated in Claims 2 and 10.

19. An arrangement for ascertaining, independent of the gas and air content, the content of dry matter in a flow acidulated milk,
**characterised by** a microwave transmission meter (26a, 26b) and a radiation absorption meter (26c, 26d) operating with radioactive radiation, in a measuring position on a length of pipe (12) and with a processor (26g) for electrically interlinking the results of measurement obtained from the two meters (26a, 26b; 26c, 26d).

20. An arrangement according to Claim 19,
**characterised in that**
the processor (26g) is constructed for electrical interlinking of the measured results from the two meters (26a, 26b; 26c, 26d) in accordance with the following formula

$$\text{(III)} \qquad DM_{mix} = 1 - A \cdot \frac{\phi}{\ln\frac{Io}{I}}$$

the symbols in this formula having the same meanings as indicated in Claims 2 and 10.


**Revendications**

1. Procédé pour la séparation continue d'un flux d'arrivée (conduit 12, 112) de lait fermenté en deux flux partiels (conduits 20, 120 et 22, 122), notamment un flux de caillé (conduit 22, 122) et un flux de petit-lait (conduit 20, 120), à l'aide d'un dispositif de séparation (14, 114), le débit de l'un (conduit 20, 120) des flux partiels pouvant être modifié, pour influencer la teneur en matière sèche du flux de caillé (conduit 22, 122) caractérisé en ce que,
dans le flux d'arrivée (conduit 12, 112) du lait fermenté, une valeur de mesure indépendante de la teneur en air et en gaz du flux d'arrivée (conduit 12, 112) du lait fermenté, représentant sa teneur en matière sèche, est calculée d'une part par une mesure de transmission de micro-ondes et d'autre part par une mesure supplémentaire de la densité du flux d'arrivée (conduit 12, 112) du lait fermenté et en ce que le débit par unité de temps d'au moins l'un des flux partiels (conduit 20, 120, et 22, 122), en fonction de cette valeur de mesure, est régulé en vue de maintenir constante la teneur en matière sèche du flux de caillé (conduit 22, 122).

2. Procédé selon la revendication 1,
caractérisé en ce que,
en utilisant la valeur de mesure représentant la teneur en matière sèche dans le flux d'arrivée (conduit 12, 112) du lait fermenté, une valeur de consigne du débit par unité de temps, d'au moins un des flux partiels, est déterminée d'après la formule

$$\text{(I)} \qquad m_{\text{flux partiel - consigne}} = f(m_{mix}; TM_{mix}; TM_{curd}; TM_{\text{petit - lait}})$$

13

sachant que dans cette formule

$m_{flux\ partiel\text{-}consigne}$ représente la valeur de consigne du débit du flux partiel considéré, par unité de temps, en vue de laquelle la valeur réelle de ce débit de flux partiel doit être régulée, pour obtenir la teneur en matière sèche du flux de caillé souhaitée,

$m_{mix}$ représente le débit du flux de lait fermenté par unité de temps,

$TM_{mix}$ représente la teneur en matière sèche du flux de lait fermenté calculée, indépendante de la teneur en air et en gaz,

$TM_{curd}$ représente la teneur en matière sèche du flux de caillé souhaitée, laquelle est donnée,

$TM_{petit\text{-}lait}$ représente la teneur en matière sèche du flux de petit-lait,

$TM_{mix}$ étant mesuré en continu,

$TM_{petit\text{-}lait}$ étant de plus, le cas échéant, mesuré en continu ou supposé constant,

et $m_{mix}$ étant de plus, le cas échéant, mesuré en continu ou supposé constant,

et en ce que la valeur de consigne du débit du flux partiel considéré, calculée d'après cette formule est comparée avec la valeur réelle du débit par unité de temps de ce flux partiel et est régulée en s'appuyant sur cette comparaison valeur de consigne/valeur réelle du débit du flux partiel considéré, en vue de maintenir faible la différence entre valeur de consigne/valeur réelle.

3. Procédé selon la revendication 2,
caractérisé en ce que,
le débit considéré est régulé par une vanne papillon (24 ou 125) réglable.

4. Procédé selon l'une quelconque des revendications 2 et 3,
caractérisé en ce que, la valeur de consigne du débit par unité de temps du flux de petit-lait est déterminée d'après la formule

$$(\text{II}) \qquad m_{petit\text{-}lait\text{-}consigne} = \frac{TM_{curd} - TM_{mix}}{TM_{curd} - TM_{petit-lait}} \cdot m_{mix}$$

dans laquelle $m_{petit\text{-}lait\text{-}consigne}$ représente la valeur de consigne du flux de petit-lait, en vue de laquelle s'opère la régulation pour atteindre la teneur en matière sèche du flux de caillé souhaitée et les autres symboles ont les mêmes significations que celles indiquées dans la revendication 2,

$TM_{mix}$ étant mesuré en continu,

$TM_{petit\text{-}lait}$ étant de plus, le cas échéant, mesuré en continu ou toutefois supposé constant,

et $m_{mix}$ étant, le cas échéant, mesuré en continu ou supposé constant.

5. Procédé selon l'une quelconque des revendications 2 et 3,
caractérisé en ce que,
une centrifugeuse (14) est utilisée en tant que dispositif de séparation.

6. Procédé selon la revendication 5,
caractérisé en ce que,
dans le cas de l'utilisation d'une centrifugeuse (14) en tant que dispositif de séparation, le débit du flux de petit-lait (conduit 20) est régulé.

7. Procédé selon l'une quelconque des revendications 1 à 4,
caractérisé en ce qu'
un dispositif à membrane (114) est utilisé en tant que dispositif de séparation.

8. Procédé selon la revendication 7,
caractérisé en ce que,
dans le cas de l'utilisation d'un dispositif à membrane (114) en tant que dispositif de séparation, le débit du flux de rétentat (conduit 122) est régulé.

9. Procédé selon l'une quelconque des revendications 1 à 8,
caractérisé en ce que,
la détermination supplémentaire de densité du flux d'arrivée (conduit 12, 112), du lait fermenté, est réalisée par une mesure d'absorption de rayonnements, en particulier au moyen d'un émetteur de rayonnements radioactif (26c).

10. Procédé selon la revendication 9,
caractérisé en ce que,

la valeur de mesure, indépendante de la teneur en gaz et en air du flux d'arrivée de lait fermenté, représentant la teneur en matière sèche de ce flux d'arrivée est calculée d'après la formule

$$(III) \qquad TM_{mix} = 1 - A \cdot \frac{\Phi}{\ln\frac{Io}{I}}$$

$TM_{mix}$ ayant à nouveau la même signification que celle indiquée dans la revendication 2,
$\Phi$ représentant un décalage de phases du rayonnement de micro-ondes après le passage à travers le flux d'arrivée du lait fermenté, mesuré par un appareil de transmission de micro-ondes,
In représentant le logarithmus naturalis,
I représentant l'intensité de rayonnements d'un rayonnement provenant d'un émetteur de rayons gamma ou similaire (Cs 137), mesurée après le passage à travers le flux d'arrivée,
Io représentant une valeur de mesure vide, constante, en fonction de l'intensité de rayonnement du rayonnement de l'émetteur de rayons gamma à travers le conduit vide du flux d'arrivée et
A représentant un paramètre d'étalonnage.

11. Dispositif pour la séparation continue d'un flux d'arrivée de lait fermenté en deux flux partiels, notamment un flux de caillé et un flux de petit-lait, comprenant un dispositif de séparation (14, 114), une arrivée (12, 112) pour le flux d'arrivée du lait fermenté vers le dispositif de séparation (14, 114), une évacuation (22, 122) du dispositif de séparation (14, 114), pour le flux de caillé ou le flux de rétentat, une évacuation (20, 120) du dispositif de séparation (14, 114), pour le flux de petit-lait, un organe de réglage (24, 125) pour le réglage du débit par au moins une (20, 122) des évacuations (22, 122; 20, 120) pour le réglage de la teneur en matière sèche dans le flux de caillé, caractérisé par un dispositif de mesure (26, 126) pour le calcul de la teneur en matière sèche dans le flux d'arrivée (12, 112), indépendante de la teneur en air et en gaz, reposant sur une mesure de transmission de micro-ondes et sur une mesure supplémentaire de densité du flux du lait fermenté et, en outre, caractérisé par une liaison dans le circuit entre ce dispositif de mesure (26, 126) et l'organe de réglage (24, 125) pour maintenir constante la teneur en matière sèche du flux de caillé.

12. Dispositif selon la revendication 11, caractérisé par un processeur (28, 128), lequel calcule d'après la formule

$$(I) \qquad m_{\text{flux partiel - consigne}} = f(m_{mix}; TM_{mix}; TM_{curd}; TM_{\text{petit - lait}})$$

la valeur de consigne du débit par unité de temps d'un flux partiel, par une des évacuations, en vue de laquelle ce flux partiel doit être réglé, afin d'atteindre une teneur en matière sèche donnée, souhaitée dans le flux de caillé, les diverses grandeurs ayant les significations indiquées dans la revendication 2,
ce processeur (28, 128) étant relié avec le dispositif de mesure (26, 126) pour le calcul de la teneur en matière sèche du flux d'arrivée du caillé, indépendante de la teneur en gaz et en air, et avec un élément de réglage (24, 25), pour la saisie de la teneur en matière sèche du flux de caillé souhaitée,
et ce processeur (28, 128) étant en outre relié, le cas échéant, avec des appareils de mesure (34, 134; 30, 130), lesquels calculent la teneur en matière sèche du petit-lait et le débit du flux d'arrivée par unité de temps, dans la mesure où la teneur en matière sèche du petit-lait et/ou le débit du flux d'arrivée par unité de temps ne peuvent pas être supposés constants, en ce que le processeur (28, 128) est relié avec l'entrée d'un comparateur (42, 142), en ce qu'une deuxième entrée de ce comparateur (42, 142) est reliée avec un appareil de mesure (44, 145) pour la détermination du débit réel par unité de temps de l'un des flux partiels et en ce qu'une sortie (48, 149) du comparateur est reliée avec l'élément de réglage (24, 125).

13. Dispositif selon la revendication 12,
caractérisé en ce que,
le processeur (28) est conçu pour le calcul du débit de consigne par unité de temps du flux de petit-lait (conduit 20) d'après la formule

$$(II) \qquad m_{\text{petit - lait - consigne}} = \frac{TM_{curd} - TM_{mix}}{TM_{curd} - TM_{\text{petit}-\text{lait}}} \cdot m_{mix}$$

les symboles utilisés dans cette formule ayant les significations indiquées dans les revendications 2 et 4.

14. Dispositif selon l'une quelconque des revendications 11 à 13,
caractérisé en ce que,
le dispositif de mesure (26) pour la détermination de la teneur en matière sèche dans le flux d'arrivée (conduit 12) du lait fermenté, indépendante de la teneur en air et en gaz, comprend un appareil de mesure de transmission de micro-ondes (26a, 26b), un appareil de mesure d'absorption de rayonnements (26c, 26d) travaillant avec un rayonnement radioactif et un autre processeur (26g), lequel calcule, à partir des résultats de mesure des deux appareils de mesure (26a, 26b; 26c, 26d) la valeur de mesure de la teneur en matière sèche du flux d'arrivée du lait fermenté (conduit 12), indépendante de la teneur en air et en gaz.

15. Dispositif selon la revendication 14,
caractérisé en ce que,
l'autre processeur (26g) pour la détermination de la teneur en matière sèche du flux d'arrivée du caillé (conduit 12), indépendante de la teneur en gaz et en air, est conçu d'après la formule

$$\text{(III)} \qquad TM_{mix} = 1 - A \cdot \frac{\Phi}{\ln\frac{Io}{I}}$$

les symboles utilisés dans cette formule ayant la même signification que celle indiquée dans les revendications 2 et 10.

16. Procédé pour le calcul de la teneur en matière sèche du flux d'arrivée du caillé (conduit 12), indépendante de la teneur en gaz et en air,
caractérisé en ce que,
sont réalisées d'une part une mesure de transmission de micro-ondes et d'autre part une mesure supplémentaire de densité sur le flux de lait fermenté (conduit 12) et les résultats sont reliés électriquement les uns aux autres.

17. Procédé selon la revendication 16
caractérisé en ce que,
la mesure supplémentaire de densité repose sur l'absorption de rayonnements radioactifs dans le flux de lait fermenté (conduit 12).

18. Procédé selon l'une quelconque des revendications 16 ou 17,
caractérisé en ce que,
les résultats de mesure de transmission de micro-ondes et de la mesure d'absorption de rayonnement radioactif sont reliés les uns aux autres d'après la formule suivante

$$\text{(III)} \qquad TM_{mix} = 1 - A \cdot \frac{\Phi}{\ln\frac{Io}{I}}$$

les divers symboles dans cette formule ayant les significations indiquées dans les revendications 2 et 10.

19. Dispositif pour le calcul de la teneur en matière sèche du flux d'arrivée du caillé, indépendante de la teneur en gaz et en air, caractérisé par un appareil de mesure de transmission de micro-ondes (26a, 26b), un appareil de mesure à absorption de rayonnements (26c, 26d) travaillant avec un rayonnement radioactif, en position de mesure sur un tracé de conduit (12) acheminant le lait fermenté, ainsi que par un processeur (26g) pour la liaison électrique des résultats de mesure obtenus par les deux appareils de mesure (26a, 26b; 26c, 26d).

20. Dispositif selon la revendication 19,
caractérisé en ce que,
le processeur (26g) pour la liaison électrique des résultats de mesure obtenus par les deux appareils de mesure (26a, 26b; 26c, 26d) est conçu d'après la formule suivante

$$\text{(III)} \qquad TM_{mix} = 1 - A \cdot \frac{\Phi}{\ln\frac{Io}{I}}$$

les divers symboles dans cette formule ayant les significations indiquées dans les revendications 2 et 10.

FIG.1

FIG.2

EP 0 440 208 B1

# FIG. 3